# EUROPEAN PATENT APPLICATION

(11) **EP 4 776 464 A1**
(43) Date of publication of application: **15.07.2026**
(21) Application number: 25725415.1
(22) Date of filing: 07.04.2025
(51) Int. Cl.: H02J 7/00, H02J 7/60, H02J 7/80

(54) **SIGNAL BYPASS DEVICE AND ENERGY STORAGE SYSTEM**

(30) Priority: 11.09.2024 CN 202411266978; 11.09.2024 CN 202411267492; 11.09.2024 CN 202411267828
(71) Applicant: SHENZHEN POWEROAK NEWENER CO., LTD, Shenzhen, Guangdong 518000 (CN)
(72) Inventor: YOU, Yongliang, Shenzhen, Guangdong 518000 (CN); QIN, Geng, Shenzhen, Guangdong 518000 (CN); CHEN, Zhibin, Shenzhen, Guangdong 518000 (CN); YANG, Jinchang, Shenzhen, Guangdong 518000 (CN); LI, Xiangzhuang, Shenzhen, Guangdong 518000 (CN); ZHANG, Hua, Shenzhen, Guangdong 518000 (CN)
(74) Representative: Balder IP Law, S.L.
(86) International application number: PCT/CN2025/087388
(87) International publication number: WO 2026/056253

(57) **Abstract**

The present disclosure relates to a signal bypass device and an energy storage system. The signal bypass device includes: a battery assembly, the battery assembly being configured to electrically interact with at least one first external apparatus; and the at least one first external apparatus, the first external apparatus including a signal bypass module, and the signal bypass module being configured to bypass a local target signal when the battery assembly receives a target signal of another external apparatus. By the signal bypass device, only one short-circuit control signal can be provided for the battery assembly, thereby avoiding a sparking phenomenon, and improving safety of the whole system.

## Description

### RELATED APPLICATIONS

This application claims priority to Chinese Patent Application No. 2024112669782, entitled "Energy Storage System", filed on September 11, 2024, Chinese Patent Application No. 2024112674920, entitled "Signal Bypass Device and Energy Storage System", filed on September 11, 2024, and Chinese Patent Application No. 2024112678283, entitled "Energy Storage System Supporting Hot Plug Function", filed on September 11, 2024, which are incorporated herein by reference in their entireties.

### TECHNICAL FIELD

The present disclosure relates to the technical field of energy storage, and in particular, to a signal bypass device and an energy storage system.

### BACKGROUND

Demands for new energy products, particularly energy storage products, are increasingly strong, and for energy storage products with high powers and large battery assembly capacities, in consideration of weights of the products, a host (inverter+DC output function) and a battery assembly are generally designed to be split, and in this case, the host and the battery assembly need to be connected through a connecting wire. For a product in which the host and the battery assembly can be combined, the battery assembly can also be connected into the host in parallel in a hand-in-hand mode through the connecting wire, so as to provide electricity for the host.

However, in order to reduce a volume of the host, the DC output function is separated, a DC converter is separately made, the DC converter also needs to take power from the battery assembly through a connecting wire, and the connecting wire of the DC converter is different from the connecting wire for connecting the host to the battery assembly in that one end of the connecting wire is embedded into the DC converter, and only one end of the connecting wire is externally connected to the battery assembly.

Thus, when the host and the DC converter are both connected to the battery assembly, the battery assembly may have two short-circuit signals (connection identification signals), that is, short-circuit signals REG+ and REG- in the host and the DC converter both short-circuit REG+ and REG- of the battery assembly, and some safety problems may be caused when two short-circuit signals are simultaneously connected in some application scenarios. For example, in an energy storage system for hot plugging, when there are two short-circuit signals, no matter whether the host or the DC converter is unplugged (that is, one of the connecting wires is unplugged), REG+ and REG- of the battery assembly may still be short-circuited by the short-circuit signals REG+ and REG-in the unplugged host or DC converter, and VBAT+ and VBAT- of ports of the battery assembly are still charged. When the host and the DC converter bear loads during working, the corresponding connection ports may generate a sparking phenomenon due to currents no matter whether the host or the DC converter is unplugged first.

Therefore, the problem that the two short-circuit signals exist when the battery assembly is connected to the host and the DC converter is required to be further improved.

### SUMMARY

In a first aspect, the present disclosure provides a signal bypass device, including:
a battery assembly, the battery assembly being configured to electrically interact with at least one first external apparatus; and
the at least one first external apparatus, the first external apparatus including a signal bypass module, the signal bypass module being configured to bypass a local target signal when the battery assembly receives a target signal of another external apparatus, and the signal bypass module being further configured to provide the target signal for the battery assembly when the battery assembly does not receive the target signal of another external apparatus.

In a second aspect, the present disclosure further provides an energy storage system including the signal bypass device according to any of the above embodiments.

### BRIEF DESCRIPTION OF THE DRAWINGS

In order to illustrate the technical solutions in embodiments of the present disclosure or the related art more clearly, the drawings required for describing the embodiments or the related art will be described briefly. Apparently, the following described drawings are merely for embodiments of the present disclosure, and other drawings can be derived from these drawings by those of ordinary skill in the art without any creative effort.
FIG. 1 is a circuit diagram of a combination product in the related art;
FIG. 2 is a circuit diagram in which a host and a DC connector are connected to a battery assembly together in the related art;
FIG. 3 is a structural block diagram of a signal bypass device according to an embodiment;
FIG. 4 is a structural block diagram of the signal bypass device according to another embodiment;
FIG. 5 is a structural block diagram of an energy storage system according to an embodiment; and
FIG. 6 is a circuit diagram of the energy storage system according to another embodiment.

Reference signs
First switch module 600; first switch control unit 610; first switch 620; first switch control module 700; feedback unit 710; second switch module 800; first switch unit 810; second switch 811; third switch 812; second switch unit 820; third switch module 500; second switch control unit 910; fourth switch 920; second switch control module 200; fourth switch module 400; third switch unit 410; fourth switch unit 420; fifth switch 411; sixth switch 412.

### DETAILED DESCRIPTION

The technical solutions in embodiments of the present disclosure are clearly and completely described with reference to the accompanying drawings in the embodiments of the present disclosure, and apparently, the described embodiments are not all but only a part of the embodiments of the present disclosure. All other embodiments obtained by a person of ordinary skill in the art based on embodiments of the present disclosure without creative efforts shall fall within the protection scope of the present disclosure.

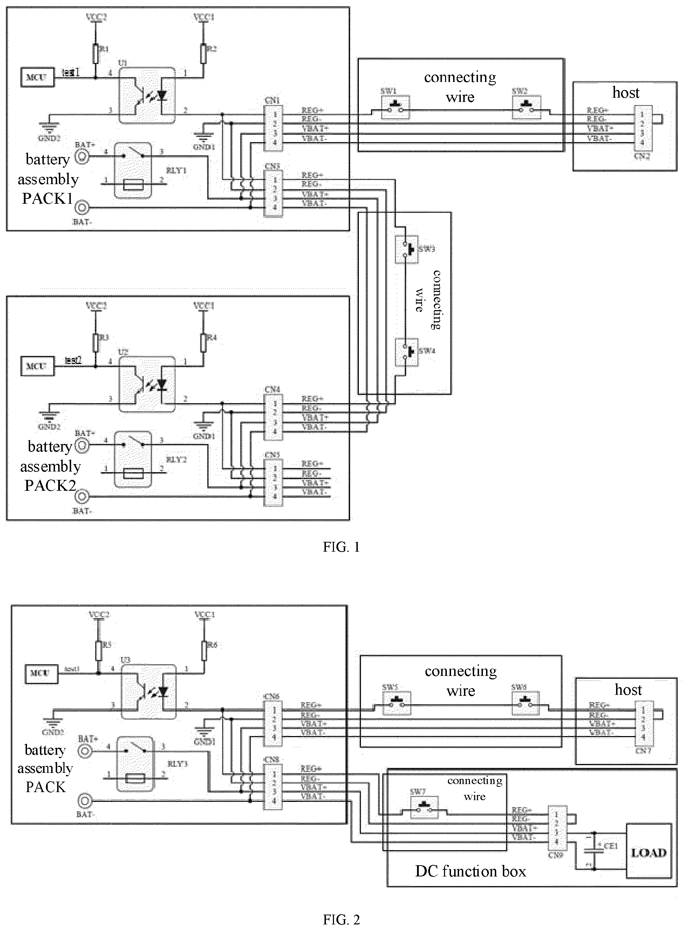

As shown in FIG. 1, in the related art, a host (inverter+DC output function) and a battery assembly are generally designed to be split, and in this case, the host and the battery assembly need to be connected through a connecting wire. For a product in which the host and the battery assembly can be combined, the battery assembly can also be connected into the host in parallel in a hand-in-hand mode through the connecting wire, so as to provide electricity for the host.

Two ends of the connecting wire are respectively connected to a port CN2 of the host and a port CN1 of the battery assembly PACK1, a switch SW1 and a switch SW2 are closed, and in this case, a first latch pin REG+ and a second latch pin REG- in the battery assembly PACK1 are short-circuited by a short-circuit signal REG+ and a short-circuit signal REG- in the host. That is, a pin 2 of an optocoupler U1 in the battery assembly PACK1 is grounded, the optocoupler U1 starts to work, a pin 4 of the optocoupler U1 is pulled to the ground, and in this case, a target signal test1 is changed from a high level to a low level. When a controller MCU detects that the target signal test1 is at the low level, a relay RLY1 is controlled to be closed, and in this case, the battery assembly PACK1 transmits electricity of a first power supply pin BAT+ and a second power supply pin BAT- to first power supply pins VBAT+ and second power supply pins VBAT- of the port CN1 and a port CN3, so as to transmit the electricity to the host. It should be further noted that if the controller MCU detects that the target signal test1 is at the high level, the relay RLY1 is controlled to be opened, and in this case, the electricity of the first power supply pin BAT+ and the second power supply pin BAT- of the battery assembly PACK1 is not transmitted to the first power supply pins VBAT+ and the second power supply pins VBAT- of the port CN1 and the port CN3, which is similar for the following battery assembly PACK. When combined use is required, the two ends of the connecting wire are respectively connected to the port CN3 of the battery assembly PACK1 and a port CN4 of the battery assembly PACK2, a switch SW3 and a switch SW4 are closed, and in this case, a first latch pin REG+ and a second latch pin REG- in the battery assembly PACK2 are short-circuited. That is, a pin 2 of an optocoupler U2 in the battery assembly PACK2 is grounded, the optocoupler U2 starts to work, a pin 4 of the optocoupler U2 is pulled to the ground, and in this case, a target signal test2 is changed from a high level to a low level. When the controller MCU detects that the target signal test2 is at the low level, a relay RLY2 is controlled to be closed, and in this case, the battery assembly PACK2 transmits electricity of a first power supply pin BAT+ and a second power supply pin BAT- to first power supply pins VBAT+ and second power supply pins VBAT- of the port CN4 and a port CN5, and electricity is transmitted to the host through the first power supply pin VBAT+ and the second power supply pin VBAT- of the port CN3 of the battery assembly PACK1 in parallel (that is, the battery assembly PACK1 and the battery assembly PACK2 are connected in parallel to together transmit the electricity to the host).

In addition, in order to reduce a volume of the host, the DC output function is separated, a DC converter is separately made, the DC converter also needs to take power from the battery assembly PACK through a connecting wire, and the connecting wire of the DC converter is different from the connecting wire for connecting the host to the battery assembly PACK in that one end of the connecting wire is embedded into the DC converter, and only one end of the connecting wire is externally connected to the battery assembly PACK. As shown in FIG. 2, an original connection method for connecting the DC converter and the battery assembly PACK may have the following problems:
when the host (inverter) is connected to a port CN6 of the battery assembly PACK, the battery assembly PACK transmits the electricity of the first power supply pin BAT+ and the second power supply pin BAT- to first power supply pins VBAT+ and second power supply pins VBAT- of the port CN6 and a port CN8, and in this case, the first power supply pin VBAT+ and the second power supply pin VBAT- of the port CN8 of the battery assembly PACK are charged. When the DC converter is connected to the port CN8 of the battery assembly PACK, a capacitor CE1 in the DC converter is in a short-circuit state at a charging moment no matter whether a switch SW7 is closed, so that a current is relatively large, and further, when the DC converter is connected to the battery assembly PACK, a sparking phenomenon occurs at the connection port.

When the host and the DC converter are respectively connected to the port CN6 and the port CN8 of the battery assembly PACK, two short-circuit control signals exist. That is, the short-circuit signals REG+ and REG- in the host and the DC converter both short-circuit the first latch pin REG+ and the second latch pin REG-in the battery assembly PACK, and in this case, no matter whether the host or the DC converter is unplugged (that is, one of the connecting wires is unplugged), the first latch pin REG+ and the second latch pin REG- in the battery assembly PACK are still short-circuited by the short-circuit signals REG+ and REG- in the unplugged host or DC converter, and the first power supply pins VBAT+ and the second power supply pins VBAT- of the port CN6 and the port CN8 of the battery assembly PACK are still charged. When the host and the DC converter bear loads during working, the corresponding connection ports may generate the sparking phenomenon due to the currents no matter whether the host or the DC converter is unplugged first.

It should be noted that all switches can be closed after the connecting wires are connected, and similarly, the connecting wires can be unplugged only by opening the switches.

In conclusion, under the above working conditions, the corresponding connection ports may generate the sparking phenomenon, so that the product and a user cannot be safely ensured.

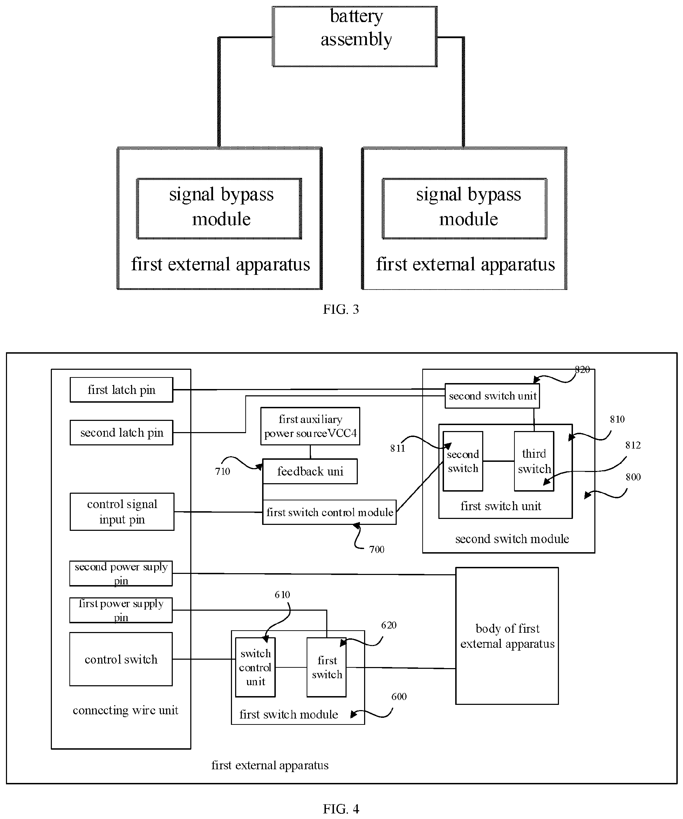

In order to solve the above technical problem, the present disclosure provides a signal bypass device, and in an embodiment, as shown in FIG. 3 together, the signal bypass device includes a battery assembly PACK and at least one first external apparatus, the battery assembly PACK being configured to electrically interact with the at least one first external apparatus.

The battery assembly PACK may be a battery pack, and in other embodiments, the battery assembly PACK may alternatively be in other forms, which is not limited herein.

Each first external apparatus includes a signal bypass module, and the signal bypass module is configured to bypass a local target signal in the case where the battery assembly PACK receives a target signal of another external apparatus. In an embodiment, the signal bypass module determines whether to bypass the local target signal by detecting a type of a control signal output by a control signal output end of the battery assembly PACK. For example, when detecting that the control signal output end of the battery assembly PACK outputs a first control signal, the signal bypass module bypasses the local target signal. When detecting that the control signal output end of the battery assembly PACK outputs a second control signal, the signal bypass module outputs a target signal to the battery assembly PACK.

The target signal may be a short-circuit control signal of the battery assembly PACK, and after receiving the short-circuit control signal, the battery assembly PACK is controlled to start working, so as to electrically interact with each external apparatus connected to the battery assembly PACK. For example, the battery assembly PACK supplies power to each external apparatus connected to the battery assembly PACK, or each external apparatus supplies power to the battery assembly PACK, which is not limited herein.

After one external apparatus is connected to the battery assembly PACK, the connected external apparatus provides the target signal for the battery assembly PACK, and first external apparatuses which are subsequently connected cannot provide the target signals for the battery assembly PACK due to the existence of the signal bypass module. It should be noted that the external apparatus connected to the battery assembly PACK first may be a first external apparatus, i.e., the external apparatus including the signal bypass module, or may be another second external apparatus that does not include the signal bypass module.

According to the present disclosure, only one external apparatus can provide the target signal for the battery assembly PACK, and the other first external apparatuses cannot provide the target signals for the battery assembly PACK, so that when the external apparatus for providing the target signal for the battery assembly PACK is unplugged first, the battery assembly PACK does not work, and a power supply pin of the battery assembly PACK is not charged, thereby avoiding a sparking phenomenon.

In an embodiment, the signal bypass module is further configured to provide the target signal for the battery assembly PACK in the case where the battery assembly PACK does not receive the target signal of the other external apparatus.

In one or more embodiments, in the case where the external apparatus connected to the battery assembly PACK first is the first external apparatus, the signal bypass module of the first external apparatus provides the target signal for the battery assembly PACK. In an embodiment, a default state of the first external apparatus is set to provide the target signal for the battery assembly PACK, and after the first external apparatus is connected to the battery assembly PACK, the signal bypass module detects that the control signal output by the control signal output end of the battery assembly PACK is a second control signal (in this case, since no external apparatus is connected to the battery assembly PACK, the battery assembly PACK does not work), and then, the first external apparatus outputs the target signal to the battery assembly PACK.

After the first external apparatus is connected to the battery assembly PACK, the battery assembly PACK works, and the subsequently connected first external apparatuses do not provide the target signals for the battery assembly PACK. However, in order to ensure normal working, when a number of the first external apparatuses is greater than or equal to two, an unplugging sequence of the first external apparatuses connected to the battery assembly PACK needs to be limited. For example, the first external apparatus that does not provide the target signal for the battery assembly PACK needs to be unplugged first. When the number of the first external apparatus is one, the unplugging sequence of the external apparatus is not limited, so that the first external apparatus which is connected later can provide the target signal for the battery assembly PACK after the first connected external apparatus is unplugged. When the first external apparatus which is connected later is unplugged first, working of the first connected external apparatus is not affected, and reference may be made to the following analysis for details.

In an embodiment, the system further includes: a second external apparatus, the second external apparatus being connected to the battery assembly PACK, and the second external apparatus being configured to provide a target signal for the battery assembly PACK under the condition that the battery assembly PACK does not receive the target signal of the first external apparatus.

In the present disclosure, the second external apparatus is a device without the signal bypass module, so that if the second external apparatus and the first external apparatus are both connected to the battery assembly PACK, the second external apparatus needs to be connected first, the second external apparatus provides the target signal for the battery assembly PACK, and when the first external apparatus is connected subsequently, the first external apparatus bypasses the local target signal. When the number of the first external apparatuses is greater than or equal to two, the first external apparatus that does not provide the target signal for the battery assembly PACK needs to be unplugged first. When the number of the first external apparatus is one, the first external apparatus can be unplugged first, or the second external apparatus can be unplugged first.

In summary, the connection methods in the present disclosure may be as follows.
1. At least one first external apparatus is connected to the battery assembly PACK, and in this case, the first external apparatus connected to the battery assembly PACK first provides the target signal for the battery assembly PACK, which includes the following conditions:
   1.1. two first external apparatuses are connected to the battery assembly PACK, and the sequence in which the two first external apparatuses are connected to the battery assembly PACK and the unplugging sequence are not limited;
   1.2. three or more first external apparatuses are connected to the battery assembly PACK, the sequence in which the first external apparatuses are connected to the battery assembly PACK is not limited, but as the unplugging sequence, the first external apparatus which does not provide the target signal is unplugged first, and when a number of the remaining external apparatuses is 2, reference is made to the case described in 1.1; and
   1.3. only one first external apparatus is connected to the battery assembly PACK, and the first external apparatus provides the target signal for the battery assembly PACK.
2. One second external apparatus and at least one first external apparatus are connected to the battery assembly PACK, which includes the following conditions:
   2.1. one second external apparatus and one first external apparatus are connected to the battery assembly PACK, and the second external apparatus is connected to the battery assembly PACK first, so that the second external apparatus provides the target signal for the battery assembly PACK, and subsequently, the first external apparatus can be unplugged first, or the second external apparatus can be unplugged first; and
   2.2. one second external apparatus and at least two first external apparatuses are connected to the battery assembly PACK, and in this case, the second external apparatus provides the target signal for the battery assembly PACK, and as the unplugging sequence, the first external apparatus not providing the target signal is first unplugged, and under the condition that one first external apparatus and one second external apparatus are left, reference may be made to the above operation.

The first external apparatus and the second external apparatus in the present disclosure can be hosts or DC converters.

Following the above description, the first external apparatus includes the signal bypass module. In an embodiment, the first external apparatus can further include a signal control module, the signal control module being configured to control connection and disconnection of the power supply pin of the battery assembly PACK and the first external apparatus. A structure of the signal bypass module and a structure of the signal control module are described in detail below.

When the DC converter and the host are both the first external apparatuses, in order to distinguish the DC converter and the host, the signal control module of the DC converter includes a first switch module 600, and the first switch module 600 includes a first switch control unit 610 and a first switch 620. The signal control module of the host includes a third switch module 500, and the third switch module 500 includes a second switch control unit 910 and a fourth switch 920. The signal bypass module in the DC converter includes a first switch control module 700 and a second switch module 800, the second switch module 800 includes a first switch unit 810 and a second switch unit 820, the first switch unit 810 includes a second switch 811 and a third switch 812, and the first switch control module 700 further includes a first feedback unit. The signal bypass module in the host includes a second switch control module 200 and a fourth switch module 400, the fourth switch module 400 includes a third switch unit 410 and a fourth switch unit 420, the third switch unit 410 includes a fifth switch 411 and a sixth switch 412, and the second switch control module 200 further includes a second feedback unit. In the present disclosure, the first external apparatus is described by using the names of the modules and units in the DC converter, and similarly, the connection relationship and principle can be applied to the modules and units in the host.

In an embodiment, as shown in FIG. 4 together, the signal bypass module includes a first switch control module 700 and a second switch module 800, a first input end of the first switch control module 700 is connected to the control signal output end of the battery assembly PACK, and a fixed voltage is inputted to a second input end of the first switch control module 700; and a control end of the second switch module 800 is connected to an output end of the first switch control module 700.

The first switch control module 700 is configured to output a first switch control signal based on the first control signal and the fixed voltage when the control signal output end of the battery assembly PACK outputs the first control signal; and the second switch module 800 is configured to switch a short-circuit state of a first latch pin and a second latch pin of the first external apparatus to an off state under the action of the first switch control signal.

The first switch control module 700 is configured to output a second switch control signal when the control signal output end of the battery assembly PACK outputs the second control signal; and the second switch module 800 is configured to keep the short-circuit state of the first latch pin and the second latch pin of the first external apparatus under the action of the second switch control signal.

The first control signal is output by the control signal output end of the battery assembly PACK in the case where an external apparatus is connected to the battery assembly PACK and provides the target signal for the battery assembly PACK. The first control signal enters the first switch control module 700 to cause the first switch control module 700 to output the first switch control signal, and under the action of the first switch control signal, the second switch module 800 switches the short-circuit state of a first latch signal and a second latch signal of the first external apparatus into the off state, so that the first external apparatus bypasses the target signal to ensure that only one target signal is received in the battery assembly PACK. It should be further noted that, no matter how many first external apparatuses are subsequently connected to the battery assembly PACK, the local target signal of the first external apparatus is bypassed due to the signal bypass module in the first external apparatus, so that only one target signal is received in the battery assembly PACK.

Under the condition that the first external apparatus is connected to the battery assembly PACK, and the control signal output end of the battery assembly PACK outputs the second control signal, that is, no external apparatus is connected to the battery assembly PACK, the first switch control module 700 outputs the second switch control signal, and the second switch module 800 is configured to keep the short-circuit state of the first latch pin and the second latch pin of the first external apparatus under the action of the second switch control signal.

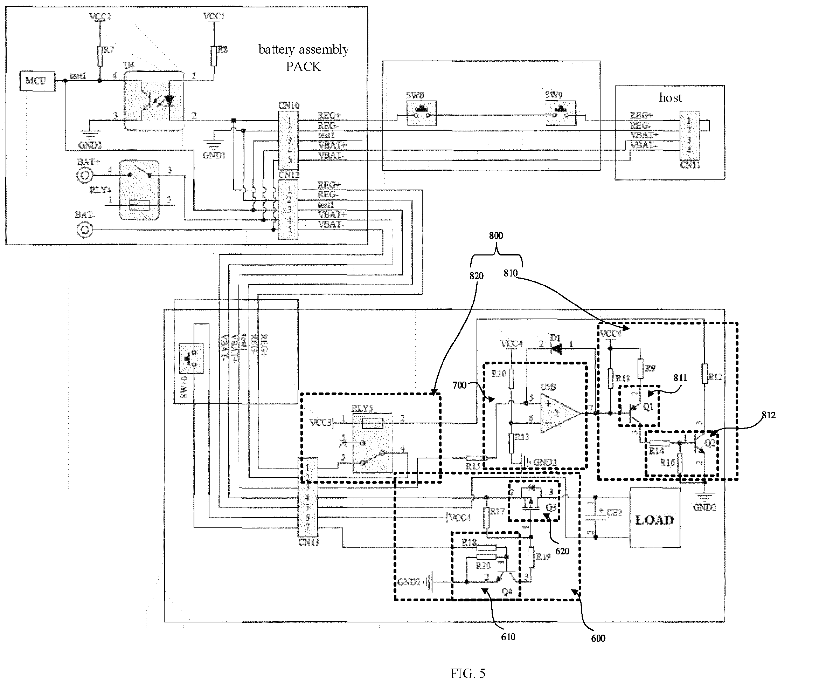

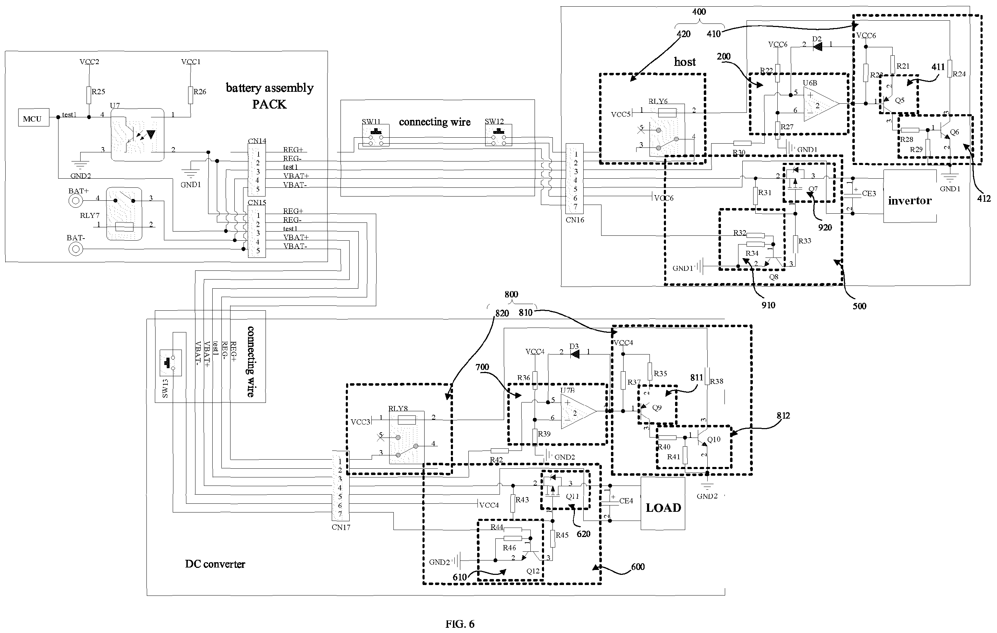

As shown in FIG. 4 together, in one or more embodiments, an output end (e.g., a port CN12 and a port CN10 in FIG. 5, and a port CN14 and a port CN15 in FIG. 6) of the battery assembly PACK includes a control signal output pin, a first latch pin, a second latch pin, a first power supply pin, and a second power supply pin, and a corresponding port (e.g., a port CN13 in FIG. 5, and a port CN16 and a port CN17 in FIG. 6) of the first external apparatus may include a target signal input pin, the first latch pin, the second latch pin, a first power supply pin, and a second power supply pin. When the first external apparatus is connected to the battery assembly PACK, the corresponding pins are connected. A corresponding port (e.g., a port CN11 in FIG. 5) of the second external apparatus includes a first latch pin, a second latch pin, a first power supply pin, and a second power supply pin, and when the second external apparatus is connected to the battery assembly PACK, the corresponding pins are connected. In order to implement the connection between the external apparatus and the battery assembly PACK, the present disclosure can also introduce a connecting wire unit, and one end of the connecting wire unit can be inserted into an output port of the battery assembly PACK or unplugged from the output port of the battery assembly PACK; the other end of the connecting wire unit can be connected to the first external apparatus or the second external apparatus through a corresponding port of the first external apparatus or the second external apparatus, that is, the connecting wire unit serves to connect the output port of the battery assembly PACK to the corresponding port of the first external apparatus or the second external apparatus.

In an embodiment, as shown in FIG. 5 or FIG. 6 together, the first switch control module 700 is a comparator unit (for example, a comparator unit U5B in FIG. 5, or a comparator unit U6B and a comparator unit U7B in FIG. 6), and a voltage value of the first control signal input to the first input end of the comparator unit is smaller than the fixed voltage. The first input end of the comparator unit is directly or indirectly connected to the target signal input pin of the first external apparatus. For example, the first input end of the comparator unit U5B is connected to the target signal input pin of the port of the first external apparatus through a first resistor (e.g., a resistor R15 in FIG. 5, or a resistor R42 and a resistor R30 in FIG. 6), and the second input end of the comparator unit is connected to an output end of a voltage division circuit, so that the fixed voltage can be input. As shown in FIG. 5 together, the voltage division circuit may include a second resistor (e.g., a resistor R10 in FIG. 5, or a resistor R36 and a resistor R22 in FIG. 6) and a third resistor (e.g., a resistor R13 in FIG. 5, or a resistor R39 and a resistor R27 in FIG. 6), a first end of the third resistor is grounded, a second end of the third resistor is connected to the second resistor and the second input end of the comparator unit, a second end of the second resistor is connected to a first auxiliary power source (e.g., an auxiliary power source VCC4 in FIG. 5, and an auxiliary power source VCC4 and an auxiliary power source VCC6 in FIG. 6), and in other embodiments, the voltage division circuit may have other forms and is not limited.

In one or more embodiments, the first control signal enters a positive input end "+" (i.e., the first input end of the comparator mentioned above) of the comparator unit, a signal at a negative input end "-" (i.e., the second input end of the comparator mentioned above) of the comparator unit is a voltage value of the third resistor, i.e., a voltage value obtained after a voltage of the first auxiliary power source relative to the ground is divided by the second resistor and the third resistor, and since the voltage value of the first control signal is lower than the voltage value across the third resistor, the comparator unit outputs the first switch control signal. In one or more embodiments, after the battery assembly PACK is connected to one external apparatus (e.g., the first external apparatus or the second external apparatus), the battery assembly PACK outputs the first control signal, so that the comparator unit outputs the first switch control signal, and in an embodiment, the first switch control signal is at a low level, and under the action of the first switch control signal, the second switch module 800 switches the short-circuit state of the first latch signal and the second latch signal in the first external apparatus to the off state.

In an embodiment, as shown in FIG. 4 together, the second switch module 800 includes a first switch unit 810 and a second switch unit 820, and a control end of the first switch unit 810 is connected to the output end of the first switch control module 700; a control end of the second switch unit 820 is connected to an output end of the first switch unit 810; and the first switch unit 810 is configured to output a third switch control signal under the action of the first switch control signal, and the second switch unit 820 is configured to switch from connection of a first end and a second end to connection of the second end and a third end under the action of the third switch control signal.

The first switch unit 810 is configured to output the third switch control signal under the action of the first switch control signal to control the second switch unit 820 to switch a switch state, and when the first external apparatus is not connected to the battery assembly PACK, the first end and the second end of the second switch unit 820 are connected. When the control signal output end of the battery assembly PACK outputs the first control signal, the first switch control module 700 outputs the first switch control signal, the first switch unit 810 outputs the third switch control signal under the action of the first switch control signal, and the second end of the second switch unit 820 is switched to be connected to the third end under the action of the third switch control signal, so that the short-circuit state of the first latch signal and the second latch signal of the first external apparatus is switched to the off state, and the first external apparatus bypasses the target signal.

In an embodiment, the first switch unit 810 includes a second switch 811 and a third switch 812, a control end of the second switch 811 is connected to the output end of the first switch control module 700, and a first end of the second switch 811 is connected to a second auxiliary power source; and a control end of the third switch 812 is connected to a second end of the second switch 811, a first end of the third switch 812 is grounded, and a second end of the third switch 812 is connected to the control end of the second switch unit 820.

In an embodiment, the second switch 811 and the third switch 812 may be triodes, and in other embodiments, the second switch 811 and the third switch 812 may be other devices, which is not limited herein. In one or more embodiments, the second switch 811 may be a first triode (e.g., a triode Q1 in FIG. 5, or a triode Q5 or a triode Q9 in FIG. 6), and the third switch 812 may be a second triode (e.g., a triode Q2 in FIG. 5, or a triode Q6 or a triode Q10 in FIG. 6). The first switch control signal output by the output end of the first switch control module 700 is at a low level. That is, a pole b (base) of the first triode is pulled down, the first triode is turned on, the first auxiliary power source VCC4 enters a pole b (base) of the second triode through a fourth resistor (e.g., a resistor R9 in FIG. 5, or a resistor R21 and a resistor R35 in FIG. 6), the first triode, and a fifth resistor (e.g., a resistor R14 in FIG. 5, or a resistor R28 and a resistor R40 in FIG. 6), and the pole b and a pole e of the second triode are connected through an eleventh resistor (e.g., a resistor R16 in FIG. 5, or a resistor R29 and a resistor R41 in FIG. 6), so that the second triode is turned on, and then, the second auxiliary power source (e.g., an auxiliary power source VCC3 in FIG. 5, or an auxiliary power source VCC5 and an auxiliary power source VCC3 in FIG. 6) passes through the second switch unit 820, a sixth resistor (e.g., a resistor R12 in FIG. 5, or a resistor R24 and a resistor R38 in FIG. 6), and the triode Q2 to form a current loop, the second switch unit 820 starts to work, and the second end of the second switch unit 820 is switched from connection to the first end to connection to the third end, so as to switch the short-circuit state of the first latch pin and the second latch pin in the first external apparatus to the off state, and thus, the first external apparatus bypasses the local target signal. Therefore, under the condition that there is one external apparatus providing the target signal for the battery assembly PACK, the first external apparatus newly connected to the battery assembly PACK bypasses the local target signal.

In an embodiment, the second switch unit 820 may be a relay (e.g., a relay RLY5 in FIG. 5, and a relay RLY6 and a relay RLY8 in FIG. 6), the control end of the relay is connected to the second end of the first switch unit 810, the first end of the relay is connected to the first latch pin of the battery assembly PACK, the second end of the relay is connected to the second latch pin of the battery assembly PACK, and the third end of the relay floats; and when the relay does not work, the second end of the relay is connected to the first end. The relay is configured to start to work under the condition that the control signal output end of the battery assembly PACK outputs the first control signal, so that the second end of the relay is switched from the connection to the first end of the relay to the connection to the third end of the relay.

Referring to FIG. 5 or FIG. 6 together, one control end of the relay is connected to the second end of the first switch unit 810, and the other control end is connected to the second auxiliary power source.

In one or more embodiments, the second switch unit 820 is a relay, and under the action of the third switch control signal output by the first switch unit 810, the relay is switched from connection of a pin 4 (second end) to a pin 3 (first end) to connection of the pin 4 (second end) to a pin 5 (third end), so that the first latch pin and the second latch pin of the port of the first external apparatus are switched from the short-circuit state to the off state.

It should be noted that the first end of the second switch unit 820 may be directly connected to the first latch pin of the battery assembly PACK (as shown in FIG. 5), or may be connected to the first latch pin of the battery assembly PACK by a switch (as shown in FIG. 6), which is not limited herein. The switch between the first end of the second switch unit 820 and the first latch pin of the battery assembly PACK and a control switch in the signal control module may be the same switch or two separate switches, which is not limited herein. In an embodiment, the switch between the first end of the second switch unit 820 and the first latch pin of the battery assembly PACK and the control switch in the signal control module may be located in the above-mentioned connecting wire unit.

In an embodiment, the first switch control module 700 further includes: a feedback unit 710, a first end of the feedback unit 710 is connected to the first auxiliary power source through a voltage division resistor, and a second end of the feedback unit 710 is connected to the first input end of the comparator unit. The feedback unit 710 is configured to process the first auxiliary power source to obtain a feedback signal at the moment when the second control signal at the first input end of the comparator unit is switched to the first control signal, and input the feedback signal to the first input end of the first switch control module 700, a voltage of the feedback signal is greater than the fixed voltage, and the first switch control module 700 is configured to output the second switch control signal when the feedback signal is inputted to the first input end and the fixed voltage is inputted to the second input end; and the second switch module 800 is configured to output the target signal to the battery assembly PACK under the action of the second switch control signal.

In an embodiment, the feedback unit 710 may be a first diode (e.g., a diode D1 in FIG. 5, or a diode D2 and a diode D3 in FIG. 6), the first end of the first diode is connected to the second auxiliary power source through a voltage division resistor and connected to the output end of the comparator unit, and the second end of the first diode is connected to the first input end of the comparator unit.

In one or more embodiments, if the first external apparatus that does not provide the target signal for the battery assembly PACK is unplugged, after the connection of the corresponding power supply pins of the battery assembly PACK and the first external apparatus is disconnected, a direct operation is performed, and normal working of the battery assembly PACK is not affected. If the first external apparatus that provides the target signal for the battery assembly PACK is unplugged (based on the above description, the other external apparatuses connected to the battery assembly PACK in this case are also the first external apparatuses, and the number of the external apparatuses is only one), the signal bypass module of the remaining unplugged first external apparatus provides the target signal for the battery assembly PACK. If the second external apparatus that provides the target signal for the battery assembly PACK is unplugged (based on the above description, the other external apparatuses connected to the battery assembly PACK in this case are also the first external apparatuses, and the number of the external apparatuses is only one), the signal bypass module of the unplugged first external apparatus provides the target signal for the battery assembly PACK.

Therefore, if the external apparatus (for convenience, called a third external apparatus) that provides the target signal for the battery assembly PACK is unplugged, the first latch pin REG+ and the second latch pin REG- of the battery assembly PACK are no longer short-circuited by the target signal of the third external apparatus, the battery assembly PACK does not work anymore, and in this case, the output port of the battery assembly PACK and the first power supply pin VBAT+ and the second power supply pin VBAT- of the output port of the first external apparatus have no electricity, so that when the third external apparatus is unplugged, the output port of the battery assembly PACK does not generate the sparking phenomenon.

The battery assembly PACK may include an optocoupler (e.g., an optocoupler U4 in FIG. 5 or an optocoupler U7 in FIG. 6), and when the first latch pin REG+ and the second latch pin REG- of the battery assembly PACK are no longer short-circuited by the target signal of the third external apparatus, a pin 2 of the optocoupler in the battery assembly PACK floats, and the optocoupler does not work, so that target signal pin output of the battery assembly PACK changes from the first control signal to the second control signal, for example, from a low level to a high level. When a controller MCU detects the second control signal, the relay (e.g., the relay RLY4 in FIG. 5 or the relay RLY7 in FIG. 6) of the battery assembly PACK is controlled to be turned off, the first power supply pin VBAT+ and the second power supply pin VBAT- of the output port of the battery assembly PACK have no electricity, so that when the third external apparatus is unplugged, the output port of the battery assembly PACK cannot generate the sparking phenomenon.

While the third external apparatus is unplugged, the second control signal enters the positive input end "+" of the comparator unit, and since the voltage value of the second control signal is higher than that of the negative input end "-", the comparator unit outputs a high level. That is, the second switch 811 is turned off, and the third switch 812 is also turned off, so that the second switch unit 820 is switched from the connection of the first end to the second end to the connection of the second end to the third end, and therefore, the first external apparatus provides the target signal for the battery assembly PACK. Following the above example, the second switch 811 is a first triode, the third switch 812 is a second triode, and the second switch unit 820 is a relay, so that the comparator unit outputs a high level, the pole b (base) of the first triode has a high level, the first triode is turned off, the second triode is also turned off, a coil of the relay RLY5 has no current loop, the relay RLY5 does not work and is switched from the connection of the pin 4 to the pin 5 to the connection of the pin 4 to the pin 3, and therefore, the first external apparatus provides the target signal for the battery assembly PACK, and further, the first latch pin REG+ and the second latch pin REG- in the battery assembly PACK are short-circuited by the target signal of the first external apparatus, the battery assembly PACK works, and the second control signal becomes the first control signal again. That is, the high level becomes the low level. When detecting the first control signal, the controller MCU controls the relay RLY4 to be closed, and in this case, the battery assembly PACK conveys the electricity to the first power supply pin VBAT+ and the second power supply pin VBAT- of the output port, the electricity is continuously provided for the first external apparatus, and the first external apparatus continuously works normally. It should be noted that a time from the opening to the reclosing of the relay RLY4 is quite short, and during the time, a load is powered by energy stored by a capacitor (e.g., a capacitor CE2 in FIG. 5, and a capacitor CE3 and a capacitor CE4 in FIG. 6) in the first external apparatus to ensure that the first external apparatus is not powered off. Meanwhile, since the second control signal entering the positive input end "+" of the comparator unit is changed to the first control signal, that is, the high level is changed to the low level, at the moment of changing to the first control signal, the voltage of the first auxiliary power source relative to the ground is divided by a seventh resistor (e.g., a resistor R11 in FIG. 5, or a resistor R23 and a resistor R37 in FIG. 6), the first diode and the first resistor, so that the voltage value entering the positive input end "+" of the comparator unit, i.e., a voltage value of the first resistor relative to the ground, is continuously kept larger than the voltage value of the negative input end "-", and therefore, the comparator unit continuously outputs a high level to open the second switch 811 and the third switch 812, and further, the second switch unit 820 provides the target signal for the battery assembly PACK. Following the above example, the comparator unit continuously outputs the high level to turn off the first triode and the second triode, and then, the pin 4 and the pin 3 of the relay are kept connected to maintain the target signal of the first external apparatus, so as to provide the battery assembly PACK with the target signal.

In this way, when the battery assembly PACK is connected to the second external apparatus and then connected to the first external apparatus, or the first external apparatus and the second external apparatus are connected to the battery assembly PACK, the sparking phenomenon does not occur when the second external apparatus is unplugged, safety of the whole system is improved, the original connection method and working and the combination connection method and working of the external apparatus and the battery assembly PACK are not influenced, and the safety and reliability of the product and the safety of the user are better guaranteed.

In an embodiment, with continued reference to FIG. 4 together, the first external apparatus further includes a signal control module, the signal control module including a control switch and a first switch module 600. In conjunction with the above description, the control switch in the present disclosure may be located in the connecting wire unit.

In an embodiment, the first auxiliary power source is inputted to a first end of the control switch; and a control end of the first switch module 600 is connected to a second end of the control switch. When the first external apparatus is connected to the battery assembly PACK, a first end of the first switch module 600 is connected to the first power supply pin VBAT+ of the battery assembly PACK, a second end of the first switch module 600 is connected to a first input end of the first external apparatus, and a second input end of the first external apparatus is connected to the second power supply pin VBAT- of the battery assembly PACK. It should be noted that the first auxiliary power source VCC4 may be provided by an auxiliary power module in the first external apparatus, an input end of the auxiliary power module is connected to the first power supply pin VBAT+ and the second power supply pin VBAT- of the battery assembly PACK, and an output end of the auxiliary power module is configured to provide auxiliary power sources with different voltages.

The connecting wire unit further includes two control pins, one control pin is connected to the first auxiliary power source VCC4, and the two control pins are connected through the control switch, so that the first end of the control switch receives the first auxiliary power source VCC4, and the second end of the control switch is connected to the control end of the first switch module 600, thereby controlling an on-off state of the first switch module 600 through the control switch.

All the switches can be closed after the connecting wire unit is connected, and similarly, the connecting wire unit can be unplugged only by opening the switches. Therefore, when the first external apparatus is connected to the battery assembly PACK, the control switch is in an off state, so that the first switch module 600 is in an off state, the battery assembly PACK and the first external apparatus do not electrically interact, and therefore, the sparking phenomenon does not occur when the first external apparatus is connected to the output port of the battery assembly PACK through a connecting circuit.

For convenience of understanding, in practical operation examples, the battery assembly PACK conveys electricity of a pin BAT+ and a pin BAT- to the first power supply pin VBAT+ and the second power supply pin VBAT- of each output port. In this case, the first external apparatus is connected to the battery assembly PACK, and since the control switch in the first external apparatus is in the off state, the first switch module 600 is in the off state, and even if the first power supply pin VBAT+ and the second power supply pin VBAT- of the output port of the battery assembly PACK are charged, there is no signal transmission between the battery assembly PACK and the first external apparatus, so that when the first external apparatus is connected to the output port of the battery assembly PACK, the sparking phenomenon does not occur.

In an embodiment, when the control switch is in a closed state, the first switch module 600 is in an on state, and the battery assembly PACK charges the first external apparatus. After the first external apparatus is connected to the battery assembly PACK and the control switch is closed, the control switch is in an on state, so that a switch control signal can be provided for the first switch module 600, the first switch module 600 is in the on state, and then, the first power supply pin VBAT+ and the second power supply pin VBAT- of the output port of the battery assembly PACK charge the first external apparatus, and a circuit begins normal on-load working.

In an embodiment, the first switch module 600 includes a first switch control unit 610 and a first switch 620. A control end of the first switch control unit 610 is connected to the second end of the control switch; a control end of the first switch 620 is connected to an output end of the first switch control unit 610, a first end of the first switch 620 is connected to the first power supply pin VBAT+ of the battery assembly PACK, a second end of the first switch is connected to the first input end of the first external apparatus, and the second input end of the first external apparatus is connected to the second power supply pin VBAT- of the battery assembly PACK.

Generally, the first power supply pin VBAT+ is a positive phase power supply pin, and the second power supply pin VBAT- is a negative phase power supply pin, so that the first switch 620 is arranged between the positive phase power supply pin and the first input end of the first external apparatus, thereby avoiding a sparking situation.

In an embodiment, the first switch control unit 610 may be a third triode (e.g., a triode Q4 in FIG. 5, or a triode Q8 and a triode Q12 in FIG. 6), and in other embodiments, the first switch control unit 610 may alternatively be other devices. A pole b (base) of the third triode is directly or indirectly connected to the second end of the control switch. For example, the pole b of the third triode is connected to the second end of the control switch through an eighth resistor (e.g., a resistor R18 in FIG. 5, or a resistor R32 and a resistor R44 in FIG. 6), a pole e (emitter) of the third triode is grounded, the pole b of the third triode is connected to the pole e of the third triode through a ninth resistor (e.g., a resistor R20 in FIG. 5, or a resistor R34 and a resistor R46 in FIG. 6), and a pole c (collector) of the third triode is directly or indirectly connected to the control end of the first switch 620. For example, the pole c (collector) of the third triode is connected to the control end of the first switch 620 through a tenth resistor (e.g., a resistor R19 in FIG. 5, or a resistor R33 and a resistor R45 in FIG. 6).

In an embodiment, the first switch 620 may be a metal oxide semiconductor (MOS) transistor (for example, an MOS transistor Q3 in FIG. 5, or an MOS transistor Q7 and an MOS transistor Q11 in FIG. 6), and in other embodiments, the first switch 620 may alternatively be other devices. The control end of the MOS transistor is connected to the output end of the first switch control unit 610, the control end of the MOS transistor is a pole g (gate), and when the first switch control unit 610 is the third triode, the output end of the first switch control unit 610 is the pole c (collector) of the third transistor. The first end of the MOS transistor is a pole s (source), the second end of the MOS transistor is a pole d (drain), the source of the MOS transistor is connected to the first power supply pin VBAT+ of the battery assembly PACK, for example, through the first power supply pin of the port of the first external apparatus, and the drain of the MOS transistor is connected to the first input end of the first external apparatus.

Therefore, under the condition that the control switch is in the off state, the base of the third triode is at a low level, the third triode is turned off, the first switch control unit 610 outputs an off signal to the first switch 620, the gate and the source of the first switch 620 are equipotential, and the first switch 620 is in the off state, so that an anode of the capacitor in the first external apparatus is disconnected from the first power supply pin VBAT+ of the battery assembly PACK, and then, the sparking phenomenon does not occur when the first external apparatus is connected to the output port CN12 of the battery assembly PACK.

When the control switch is closed, the first auxiliary power source enters the base of the third triode through the control switch and the eighth resistor, the third triode is turned on, a voltage input by the first power supply pin VBAT+ of the first external apparatus relative to the ground is divided through a twelfth resistor (e.g., a resistor R17 in FIG. 5, or a resistor R31 and a resistor R43 in FIG. 6) and the tenth resistor, and in this case, a gate potential of the MOS transistor Q3 is lower than a source potential. That is, a voltage Vgs of the MOS transistor Q3 is a voltage across the eighth resistor, the MOS transistor is turned on, the electricity of the first power supply pin VBAT+ and the second power supply pin VBAT- of the battery assembly PACK starts to charge the capacitor in the first external apparatus, and the circuit starts normal on-load working.

When the first external apparatus needs to be unplugged, only the control switch needs to be turned on and the connecting wire unit needs to be unplugged, and after the unplugging, the first switch module 600 is in the off state. Following the above embodiment, the pole b (base) of the third triode is changed from a high level to a low level, the third triode is turned off, the pole g (gate) and the pole s (source) of the MOS transistor are equipotential, and the MOS transistor is turned off. In this case, the first power supply pin and the second power supply pin of the port of the first external apparatus cannot convey electricity, so that when the first external apparatus is unplugged, the output port of the battery assembly PACK does not generate the sparking phenomenon, and meanwhile, continuous conveying of the electricity by the battery assembly PACK to other external apparatuses is not affected.

For convenience of understanding, as shown in FIG. 5 together, in an embodiment, an energy storage system is provided, the energy storage system includes a battery assembly PACK, a first external apparatus, and a second external apparatus, the first external apparatus is a DC converter, the second external apparatus is a host, and the DC converter of the energy storage system is configured to electrically interact with the battery assembly PACK when connected to the battery assembly PACK (a second control switch is in an on state), and bypasses a target signal of the DC converter when the host provides the target signal for the battery assembly PACK, and provides the target signal for the battery assembly PACK when the host does not provide the target signal for the battery assembly PACK.

For a specific structure of the DC converter, reference may be made to specific definitions of the first external apparatus in FIG. 4 and FIG. 5, which are not repeated herein. A specific structure of the host may be shown in FIG. 5, the host is the second external apparatus, the host is connected to the battery assembly PACK, and in an embodiment, the host is connected to the battery assembly PACK through the connecting wire unit, and a first control switch, e.g., a switch SW8 or a switch SW9 in FIG. 5, is arranged on a connecting wire for connecting the first latch pin of the output port of the battery assembly PACK and the first latch pin of the port of the host.

An internal control signal in the battery assembly PACK is output to the output port of the battery assembly PACK. For example, in FIG. 5, a signal test1 is output to the port CN10 and the port CN12, and is used as a detection signal for the DC converter, so as to implement switching of the relay RLY5, and an initial state of the relay RLY5 is the connection of the pin 4 to the pin 3.

A working principle of the energy storage system as shown in FIG. 5 is as follows: in the case where the host is first connected to the output port CN10 of the battery assembly PACK, when the first control switch SW8 or SW9 is not closed, there is no electrical interaction between the host and the battery assembly PACK, and after the first control switch is closed, the host provides the target signal for the battery assembly PACK, and the battery assembly PACK starts to work. In an embodiment, taking FIG. 5 as an example, the control signal output end of the battery assembly PACK outputs the first control signal, the first control signal test1 is at a low level, the MCU detects the low level and controls the relay RLY4 to be closed, and the battery assembly PACK transfers the electricity of the power supply pin BAT+ and the power supply pin BAT- to the first power supply pin VBAT+ and the second power supply pin VBAT- of the output port CN10 and the output port CN12. When the DC converter is then connected to the output port CN12 of the battery assembly PACK, the second control switch SW10 is still in an off state, so that the pole b of the first switch control unit 610 of the first switch module 600, i.e., the triode Q4 in FIG. 5, is at a low level, and the triode Q4 is turned off. The pole g and the pole s of the first switch 620 of the first switch module 600, i.e., the MOS transistor Q3 in FIG. 5, are equipotential, and the MOS transistor Q3 is turned off, so that the anode of the capacitor CE2 in the DC converter is disconnected from the first power supply pin VBAT+ of the port CN13 of the DC converter, and when the DC converter is connected, the output port CN12 does not generate the sparking phenomenon. When the second control switch SW10 is turned on, the first auxiliary power source VCC4 enters the pole b of the triode Q4 through the second control switch SW10 and the resistor R19, the triode Q4 is turned on, and the voltage of the first power supply pin VBAT+ relative to the ground is divided by the resistor R17 and the resistor R19. In this case, the potential of the pole g of the MOS transistor Q3 is lower than that of the pole s. That is, the voltage Vgs of the MOS transistor Q3 is the voltage across the resistor R17, the MOS transistor Q3 is turned on, the first power supply pin VBAT+ starts to charge the capacitor CE2, and the circuit starts normal on-load working.

Meanwhile, the first control signal (i.e., the low-level signal test1) enters the positive input end "+" of the first switch control module 700, i.e., the comparator unit U5B, and the signal at the negative input end "-" of the comparator unit U5B is the voltage value across the resistor R13, i.e., the voltage value obtained after the voltage of the first auxiliary power source VCC4 relative to the ground is divided by the resistor R10 and the resistor R13. Since the voltage value of the first control signal test1 is lower than the voltage value across the resistor R13, the comparator unit U5B outputs the first switch control signal, and the first switch control signal is at a low level. That is, the pole b of the second switch 811 of the first switch unit 810 of the second switch module 800, i.e., the triode Q1, is pulled down, the triode Q1 is turned on, the first auxiliary power source VCC4 enters the pole b of the third switch 812 of the first switch unit 810 of the second switch module 800, i.e., the triode Q2, through the resistor R9, the transistor Q1 and the resistor R14, and the triode Q2 is turned on. That is, the first switch unit 810 outputs the third switch control signal, and further, the second auxiliary power source VCC3 forms the current loop through the coil of the second switch unit 820 (i.e., the relay RLY5), the resistor R12, and the triode Q2, the relay RLY5 starts to work, and the relay RLY5 is switched from the connection of the pin 4 to the pin 3 to the connection of the pin 4 to the pin 5, so that the first latch pin REG+ and the second latch pin REG- in the DC converter are switched from the short-circuit state to the off state, and therefore, when both the host and the DC converter are connected to the battery assembly PACK, the first latch pin REG+ and the second latch pin REG- of the battery assembly PACK are only short-circuited by the first latch pin REG+ and the second latch pin REG- of the host. That is, the host outputs the target signal to the battery assembly PACK, and therefore, two target signals do not exist in the battery assembly PACK at the same time.

When the host and the DC converter are both connected to the battery assembly PACK to work and are loaded, if the DC converter needs to be unplugged, it is only required to turn on the second control switch SW10 and unplug the connecting wire unit, and after the unplugging, the pole b of the first switch control unit 610, i.e., the triode Q4, is changed from a high level to a low level, and the triode Q4 is turned off. The pole g and the pole s of the first switch 620, i.e., the MOS transistor Q3, are equipotential, the MOS transistor Q3 is turned off, and in this case, the first power supply pin VBAT+ and the second power supply pin VBAT- of the port CN13 of the DC converter cannot supply electricity, so that when the DC converter is unplugged, the port CN13 does not generate the sparking phenomenon. Meanwhile, continuous conveying of the electricity by the battery assembly PACK to the host for working is not affected.

When the host and the DC converter are both connected to the battery assembly PACK to work and are loaded, if the host needs to be unplugged, it is only required to turn on the first control switch SW8 or the first control switch SW9 and unplug the connecting wire unit, and after the unplugging, the first latch pin REG+ and the second latch pin REG- of the battery assembly PACK are no longer short-circuited by the target signal of the host, and the battery assembly PACK does not work. In an embodiment, the pin 2 of the optocoupler U4 in the battery assembly PACK floats, the optocoupler U4 does not work, the first control signal is changed into the second control signal, that is, the low level is changed into the high level, and when detecting the second control signal, the MCU controls the relay RLY4 to be turned off. In this case, the first power supply pin VBAT+ and the first power supply pin VBAT- of the output ports CN10 and CN12 of the battery assembly PACK have no electricity, so that when the connecting wire unit is unplugged, the output port CN10 and the output port CN12 do not generate the sparking phenomenon. Meanwhile, the second control signal enters the positive input end "+" of the comparator unit U5B, and since the voltage value of the second control signal is higher than the voltage value of the negative input end "-", the comparator unit U5B outputs the second switch control signal, and the second switch control signal is at a high level. The pole b of the second switch 811, i.e., the triode Q1, is at a high level, the triode Q1 is turned off, the third switch 812, i.e., the triode Q2, is also turned off, the coil of the second switch unit 820, i.e., the relay RLY5, has no current loop, and the relay RLY5 does not work and is switched from the connection of the pin 4 to the pin 5 to the connection of the pin 4 to the pin 3, so that the first latch pin REG+ and the second latch pin REG- in the DC converter are switched from the off state to the short-circuit state, and further, the first latch pin REG+ and the second latch pin REG- in the battery assembly PACK are short-circuited by the target signal of the DC converter, and the battery assembly PACK works again. In an embodiment, the pin 2 of the optocoupler U4 in the battery assembly PACK is grounded again, the optocoupler U4 starts to work, the pin 4 of the optocoupler U4 is pulled to the ground, and in this case, the second control signal is changed into the first control signal again, and when the MCU detects the first control signal, the relay RLY4 is controlled to be closed. In this case, the battery assembly PACK transmits the electricity of the power supply pin BAT+ and the power supply pin BAT- to the first power supply pin VBAT+ and the second power supply pin VBAT- of the output port CN10 and the output port CN12, and the electricity is continuously provided for the DC converter, so that the DC converter can continuously and normally work. It should be noted that the time from the opening to the reclosing of the relay RLY4 is quite short, and during the time, the load is powered by the energy stored by the capacitor to ensure that the DC converter is not powered off. Meanwhile, the signal entering the positive input end "+" of the comparator unit U5B is changed from the second control signal to the first control signal, and at the moment of changing to the low level, the voltage of the first auxiliary power source VCC4 relative to the ground is divided by the resistor R11, the first feedback unit (i.e., the first diode D1), and the resistor R15, so that the voltage value entering the positive input end "+" of the comparator unit U5B, i.e., the voltage value of the resistor R15 relative to the ground, is continuously maintained higher than the voltage value of the negative input end "-", and therefore, the comparator unit U5B continuously outputs the high level to turn off the second switch 811 (i.e., the triode Q1) and the third switch 812 (i.e., the triode Q2), and then, the relay RLY5 keeps the connection of the pin 4 to the pin 3 to maintain the target signal of the DC converter short-circuited. It should be particularly noted that a device parameter design needs to satisfy the following requirements: the voltage value of the second control signal needs to be higher than the voltage value of the negative input end "-" of the comparator unit U5B; and when the second control signal is changed to the first control signal, the voltage value entering the positive input end "+" of the comparator unit U5B obtained after the voltage of the first auxiliary power source VCC4 relative to the ground is divided by the resistor R11, the first feedback unit (i.e., the first diode D1), and the resistor R15 needs to be higher than the voltage value of the negative input end "-".

In conclusion, under the above working conditions, when the circuit and the method according to the present disclosure are applied, the connection port does not generate the sparking phenomenon, safety of the whole system is improved, the original connection method and working and the combination connection method and working of the host and the battery assembly PACK are not influenced, and the safety and reliability of the product and the safety of the user are better guaranteed.

For convenience of understanding, with reference to FIG. 6, in an embodiment, an energy storage system supporting a hot plugging function is provided, the energy storage system supporting a hot plugging function includes a battery assembly PACK and two first external apparatus, one of the first external apparatuses is a DC converter, and the other first external apparatus is a host. A specific working principle of the energy storage system supporting a hot plugging function is as follows: when only one host is inserted, the port CN16 of the host is connected to the output port CN14 of the battery assembly PACK through the connecting wire unit, and when a first control switch SW11 and a first control switch SW12 are in an open (off) state, the battery assembly PACK does not work, the control signal output end of the battery assembly PACK outputs the second control signal, and the second control signal at a high level enters the positive input end "+" of the second switch control module 200, i.e., the comparator unit U6B. Since the voltage value of the second control signal is higher than the voltage value of the negative input end "-", the comparator unit U6B outputs a high level. That is, the second control switch module 200 outputs a fifth switch control signal, the pole b of the fifth switch 411 of the third switch unit 410 of the fourth switch module, i.e., the triode Q5, is at a high level, the triode Q5 is turned off, the sixth switch 412 of the third switch unit 410 of the fourth switch module, i.e., the triode Q6, is also turned off, the coil of the fourth switch unit 420 of the fourth switch module, i.e., the relay RLY6, has no current loop, and the relay RLY6 does not work and keeps the connection of the pin 4 to the pin 3 (the pin 3 is a normally closed switch), so that the first latch pin REG+ and the second latch pin REG- of the host are in the short-circuit state. When the first control switch SW11 and the first control switch SW12 are closed, the first latch pin REG+ and the second latch pin REG-in the battery assembly PACK are short-circuited by the target signal of the host, the battery assembly PACK works, the control signal output end of the battery assembly PACK outputs the second control signal, and when detecting the second control signal, the MCU controls the relay RLY7 to be closed, and in this case, the battery assembly PACK transfers the electricity of the power supply pin BAT+ and the power supply pin BAT- to the corresponding first power supply pin BAT+ and second power supply pin BAT- of the output port CN14 and the output port CN15. Meanwhile, the signal entering the positive input end "+" of the second switch control module 200, i.e., the comparator unit U6B, is changed from the second control signal to the first control signal, and at the moment of changing to the low level, the voltage of the first auxiliary power source VCC6 relative to the ground is divided by the resistor R23, the second diode D2, and the resistor R30, so that the voltage value entering the positive input end "+" of the comparator unit U6B, i.e., the voltage value of the resistor R30 relative to the ground, is continuously maintained higher than the voltage value of the negative input end "-", that is, the second switch control module 200 outputs a fifth switch control signal, and therefore, the comparator unit U6B continuously outputs the high level to turn off the the triode Q5 and the triode Q6, and then, the relay RLY6 keeps the connection of the pin 4 to the pin 3 to maintain the first latch pin REG+ and the second latch pin REG- of the host short-circuited.

When the DC converter is connected to the battery assembly PACK first, that is, the DC converter is connected to the output port CN15 of the battery assembly PACK first, the control signal output end of the battery assembly PACK outputs the first control signal, the MCU detects a low level and controls the relay RLY7 to be closed, and the battery assembly PACK transfers the electricity of the power supply pin BAT+ and the power supply pin BAT- to the corresponding first power supply pin BAT+ and second power supply pin BAT- of the output port CN14 and the output port CN15.

When the host is then connected to the output port CN14 of the battery assembly PACK, the first control switch SW11 and the second control switch SW12 are still in the off state, and therefore, the pole b of the triode Q8 is at a low level, the triode Q8 is turned off, the pole g and the pole s of the MOS transistor Q7 are equipotential, and the MOS transistor Q7 is turned off, so that the anode of the capacitor in the host is disconnected from the first power supply pin VBAT+ of the port CN16, and then, the connection port does not generate the sparking phenomenon when the host is connected. When the first control switch SW11 and the second control switch SW12 are turned on, the first auxiliary power source VCC6 enters the pole b of the triode Q8 through the first control switch SW11, the second control switch SW12 and the resistor R32, the triode Q8 is turned on, and the voltage of the first power supply pin VBAT+ relative to the ground is divided by the resistor R31 and the resistor R33. In this case, the potential of the pole g of the MOS transistor Q7 is lower than that of the pole s. That is, the voltage Vgs of the MOS transistor Q7 is the voltage across the resistor R31, the MOS transistor Q7 is turned on, the first power supply pin VBAT+ starts to charge the capacitor CE3, and the circuit starts normal on-load working. Meanwhile, the first control signal enters the positive input end "+" of the second switch control module 200, i.e., the comparator unit U6B, and the signal at the negative input end "-" of the comparator unit U6B is the voltage value across the resistor R27, i.e., the voltage value obtained after the voltage of the first auxiliary power source VCC6 relative to the ground is divided by the resistor R22 and the resistor R27. Since the voltage value of the first control signal is lower than the voltage value across the resistor R27, the second switch control module 200 outputs a fourth switch control signal, that is, the comparator unit U6B outputs a low level. That is, the pole b of the triode Q5 is pulled down, the triode Q5 is turned on, the first auxiliary power source VCC6 enters the pole b of the triode Q6 through the resistor R21, the transistor Q5 and the resistor R28, and the triode Q6 is turned on. That is, the third switch unit 410 outputs a sixth switch control signal, and further, the second auxiliary power source VCC5 forms the current loop through the coil of the fourth switch unit 420 (i.e., the relay RLY6), the resistor R24, and the triode Q6, the relay RLY6 starts to work, and the relay RLY6 is switched from the connection of the pin 4 to the pin 3 to the connection of the pin 4 to the pin 5, so that the first latch pin REG+ and the second latch pin REG- in the host are switched from the short-circuit state to the off state, and therefore, when both the host and the DC converter are connected to the battery assembly PACK, the first latch pin REG+ and the second latch pin REG- of the battery assembly PACK are only short-circuited by the target signal of the DC converter, and two target signals do not exist at the same time.

When the host is connected first and the DC converter is then connected, a principle is the same as that of the case described in FIG. 5 where the host is connected first and the DC converter is then connected, and when the DC converter is connected, the connection port does not generate sparking, only the target signal of the host exists, and two target signals do not exist at the same time.

When the host and the DC converter are sequentially connected and perform on-load working, if the host needs to be unplugged, it is only required to turn on the first control switch SW11 or the first control switch SW12 and unplug the connecting wire unit, and after the unplugging, the first latch pin REG+ and the second latch pin REG- of the battery assembly PACK are no longer short-circuited by the target signal of the host, and the battery assembly PACK does not work. For example, the pin 2 of the optocoupler U7 in the battery assembly PACK floats, the optocoupler U7 does not work, the first control signal is changed into the second control signal, for example, the low level is changed into the high level, and when detecting the second control signal, the MCU controls the relay RLY7 to be turned off. In this case, the first power supply pin VBAT+ and the second power supply pin VBAT- of the output ports CN14 and CN15 of the battery assembly PACK have no electricity, so that when the connecting wire unit is unplugged, the connection port does not generate the sparking phenomenon. Meanwhile, the second control signal enters the positive input end "+" of the comparator U7 of the DC converter, and since the voltage value of the second control signal is higher than the voltage value of the negative input end "-", the comparator U7 outputs a high level. That is, the pole b of the triode Q9 is at a high level, the triode Q9 is turned off, the triode Q10 is also turned off, the coil of the second switch unit 820, i.e., the relay RLY8, has no current loop, and the relay RLY8 does not work and is switched from the connection of the pin 4 to the pin 5 to the connection of the pin 4 to the pin 3, so that the first latch pin REG+ and the second latch pin REG- in the DC converter are switched from the off state to the short-circuit state, and further, the first latch pin REG+ and the second latch pin REG- in the battery assembly PACK are short-circuited by the target signal of the DC converter, and the battery assembly PACK works again. For example, the pin 2 of the optocoupler U7 is grounded again, the optocoupler U7 starts to work, the pin 4 of the optocoupler U7 is pulled to the ground, and in this case, the second control signal is changed into the first control signal, and when the MCU detects the first control signal, the relay RLY7 is controlled to be closed. In this case, the battery assembly PACK transmits the electricity of the first power supply pin BAT+ and the second power supply pin BAT- to the first power supply pin VBAT+ and the second power supply pin VBAT- of the output port CN14 and the output port CN15, and the electricity is continuously provided for the DC converter, so that the DC converter can continuously and normally work. It should be noted that the time from the opening to the reclosing of the relay RLY7 is quite short, and during the time, the load is powered by the energy stored by the capacitor to ensure that the DC converter is not powered off. Meanwhile, the signal entering the positive input end "+" of the comparator U7 is changed from the second control signal to the first control signal, and at the moment of changing to the low level, the voltage of the first auxiliary power source VCC4 relative to the ground is divided by the resistor R37, the diode D3, and the resistor R42, so that the voltage value entering the positive input end "+" of the comparator U7, i.e., the voltage value of the resistor R42 relative to the ground, is continuously maintained higher than the voltage value of the negative input end "-", and therefore, the comparator U7 continuously outputs the high level to turn off the triode Q9 and the triode Q10, and then, the relay RLY8 keeps the connection of the pin 4 to the pin 3 to maintain the target signal of the DC converter.

When the host and the DC converter are sequentially connected and perform on-load working, if the DC converter needs to be unplugged, it is only required to turn on the second control switch SW13 and unplug the connecting wire unit, and after the unplugging, the pole b of the triode Q12 is changed from a high level to a low level, and the triode Q12 is turned off. The pole g and the pole s of the MOS transistor Q11 are equipotential, the MOS transistor Q11 is turned off, and in this case, the first power supply pin VBAT+ and the second power supply pin VBAT- of the port CN17 cannot supply electricity, so that when the connecting wire unit is unplugged, the connection port does not generate the sparking phenomenon. Meanwhile, continuous conveying of the electricity by the battery assembly PACK to the host for working is not affected. When the DC converter and the host are sequentially connected and perform on-load working, if the host needs to be unplugged, it is only required to turn on the first control switch SW11 or the first control switch SW12 and unplug the connecting wire unit, and after the unplugging, the pole b of the fourth switch 920, i.e., the triode Q8, is changed from a high level to a low level, and the triode Q8 is turned off. The pole g and the pole s of the MOS transistor Q7 are equipotential, the MOS transistor Q7 is turned off, and in this case, the first power supply pin VBAT+ and the second power supply pin VBAT- of the port CN16 cannot supply electricity, so that when the connecting wire unit is unplugged, the connection port does not generate the sparking phenomenon. Meanwhile, continuous conveying of the electricity by the battery assembly PACK to the DC converter for working is not affected.

When the DC converter and the host are sequentially connected and perform on-load working, if the DC converter needs to be unplugged, it is only required to turn on the second control switch SW13 and unplug the connecting wire unit, and after the unplugging, the first latch pin REG+ and the second latch pin REG- of the battery assembly PACK are no longer short-circuited by the target signal of the DC converter, and the battery assembly PACK does not work. In an embodiment, the pin 2 of the optocoupler U7 in the battery assembly PACK floats, the optocoupler U7 does not work, the first control signal is changed into the second control signal, and when detecting the second control signal, the MCU controls the relay RLY7 to be turned off. In this case, the first power supply pin VBAT+ and the second power supply pin VBAT- of the output ports CN14 and CN15 of the battery assembly PACK have no electricity, so that when the connecting wire unit is unplugged, the connection port does not generate the sparking phenomenon. Meanwhile, the second control signal enters the positive input end "+" of the comparator unit U6B of the host, and since the voltage value of the second control signal is higher than the voltage value of the negative input end "-", the comparator unit U6B outputs a high level. That is, the pole b of the triode Q5 is at a high level, the triode Q5 is turned off, the triode Q6 is also turned off, the coil of the relay RLY6 has no current loop, and the relay RLY6 does not work and is switched from the connection of the pin 4 to the pin 5 to the connection of the pin 4 to the pin 3, so that the first latch pin REG+ and the second latch pin REG- in the host are switched from the off state to the short-circuit state, and further, the first latch pin REG+ and the second latch pin REG- in the battery assembly PACK are short-circuited by the target signal of the host, and the battery assembly PACK starts to work. That is, the pin 2 of the optocoupler U7 is grounded again, the optocoupler U7 starts to work, the pin 4 of the optocoupler U7 is pulled to the ground, and in this case, the second control signal is changed into the first control signal, and when the MCU detects the first control signal, the relay RLY7 is controlled to be closed. In this case, the battery assembly PACK transmits the electricity of the power supply pin BAT+ and the power supply pin BAT- to the first power supply pin VBAT+ and the second power supply pin VBAT- of the output port CN14 and the output port CN15, and the electricity is continuously provided for the host, so that the host can continuously and normally work. It should be noted that the time from the opening to the reclosing of the relay RLY7 is quite short, and during the time, the load is powered by the energy stored by the capacitor to ensure that the host is not powered off. Meanwhile, the signal test1 entering the positive input end "+" of the comparator unit U6B is changed from the second control signal to the first control signal, and at the moment of changing to the low level, the voltage of the power source VCC6 relative to the ground is divided by the resistor R23, the diode D2, and the resistor R30, so that the voltage value entering the positive input end "+" of the comparator unit U6B, i.e., the voltage value of the resistor R30 relative to the ground, is continuously maintained higher than the voltage value of the negative input end "-", and therefore, the comparator unit U6B continuously outputs the high level to turn off the triode Q5 and the triode Q6, and then, the relay RLY6 keeps the connection of the pin 4 to the pin 3 to maintain the target signal of the host. It should be particularly noted that the device parameter design needs to satisfy the following requirements: the voltage value of the second control signal needs to be higher than the voltage value of the negative input end "-" of the comparator; the voltage value of the first control signal entering the positive input end "+" of the comparator needs to be higher than the voltage value of the negative input end "-".

In summary, when the circuit and the method according to the present disclosure are applied, no matter whether the host or the DC converter is connected first or no matter whether the host or the DC converter is unplugged first, the connection port does not generate the sparking phenomenon, and only one short-circuit control signal exists.

Above-described embodiments are only several implementations of the present disclosure, and the descriptions are relatively specific and detailed, but they should not be construed as limiting the scope of the present disclosure. It should be understood by those of ordinary skill in the art that various modifications and improvements can be made without departing from the concept of the present disclosure, and all fall within the protection scope of the present disclosure. Therefore, the protection scope of the present disclosure should be subject to the appended claims.

## Claims

1. A signal bypass device, comprising:
a battery assembly, the battery assembly being configured to electrically interact with at least one first external apparatus; and
the at least one first external apparatus, the first external apparatus comprising a signal bypass module, the signal bypass module being configured to bypass a local target signal when the battery assembly receives a target signal of another external apparatus, and the signal bypass module being further configured to provide the target signal for the battery assembly when the battery assembly does not receive the target signal of another external apparatus.

2. The signal bypass device according to claim 1, wherein the signal bypass module comprises:
a first switch control module, a first input end of the first switch control module being connected to a control signal output end of the battery assembly, and a fixed voltage being input to a second input end of the first switch control module; and
a second switch module, a control end of the second switch module being connected to an output end of the first switch control module; the first switch control module being configured to output a first switch control signal based on a first control signal and the fixed voltage when the control signal output end of the battery assembly outputs the first control signal; and the second switch module being configured to switch a short-circuit state of a first latch pin and a second latch pin of the first external apparatus to an off state under the action of the first switch control signal.

3. The signal bypass device according to claim 1, further comprising:
a second external apparatus, the second external apparatus being connected to the battery assembly, and the second external apparatus being configured to provide the target signal for the battery assembly under the condition that the battery assembly does not receive the target signal of the first external apparatus.

4. The signal bypass device according to claim 2 or 3, wherein the first switch control module is further configured to output a second switch control signal when the control signal output end of the battery assembly outputs a second control signal; and the second switch module is further configured to keep the short-circuit state of the first latch pin and the second latch pin of the first external apparatus under the action of the second switch control signal.

5. The signal bypass device according to claim 4, wherein the second switch module comprises:
a first switch unit, a control end of the first switch unit being connected to the output end of the first switch control module; and
a second switch unit, a control end of the second switch unit being connected to an output end of the first switch unit; and the first switch unit being configured to output a third switch control signal under the action of the first switch control signal, and the second switch unit being configured to switch from connection of a first end and a second end to connection of the second end and a third end under the action of the third switch control signal.

6. The signal bypass device according to claim 5, wherein the first switch unit comprises:
a second switch, a control end of the second switch being connected to the output end of the first switch control module, and a first end of the second switch being connected to a second auxiliary power source; and
a third switch, a control end of the third switch being connected to a second end of the second switch, a first end of the third switch being grounded, and a second end of the third switch being connected to the control end of the second switch unit.

7. The signal bypass device according to claim 5, wherein the second switch unit is a relay, a control end of the relay is connected to the second end of the first switch unit, a first end of the relay is connected to the first latch pin of the battery assembly, a second end of the relay is connected to the second latch pin of the battery assembly, and a third end of the relay floats; and under the condition that the control signal output end of the battery assembly outputs the first control signal, the second end of the relay is switched from connection to the first end of the relay to connection to the third end of the relay.

8. The signal bypass device according to claim 4, wherein the first switch control module is a comparator unit, and a voltage value of the first control signal inputted to a first input end of the comparator unit is smaller than the fixed voltage.

9. The signal bypass device according to claim 8, comprising at least one first external apparatus; or comprising one second external apparatus and at least one first external apparatus.

10. The signal bypass device according to claim 9, wherein the first switch control module further comprises:
a feedback unit, a first end of the feedback unit being connected to a first auxiliary power source through a voltage division resistor, and a second end of the feedback unit being connected to the first input end of the comparator unit; the feedback unit being configured to process the first auxiliary power source to obtain a feedback signal at the moment when the second control signal at the first input end of the comparator unit is switched to the first control signal, and input the feedback signal to the first input end of the comparator unit, a voltage of the feedback signal being greater than the fixed voltage, and the first switch control module being configured to output the second switch control signal when the feedback signal is inputted to the first input end and the fixed voltage is inputted to the second input end; and the second switch module being configured to output the target signal to the battery assembly under the action of the second switch control signal.

11. The signal bypass device according to claim 9, wherein the first external apparatus is a DC converter or a host; and the second external apparatus is a DC converter or a host.

12. The signal bypass device according to claim 11, wherein the first external apparatus is a DC converter and the second external apparatus is a host; the DC converter comprises a second control switch; and the DC converter is configured to electrically interact with the battery assembly when connected to the battery assembly and the second control switch is in an on state, bypass a target signal of the DC converter when the host provides the target signal for the battery assembly, and provide the target signal for the battery assembly when the host does not provide the target signal for the battery assembly, and the target signal is used for controlling the battery assembly to start to work to electrically interact with the DC converter and the host connected to the battery assembly.

13. The signal bypass device according to claim 12, wherein a first auxiliary power source is inputted to a first end of the second control switch; and the DC converter further comprises: a first switch module, a control end of the first switch module being connected to a second end of the second control switch; and
when the DC converter is connected to the battery assembly, a first end of the first switch module is connected to a first power supply pin of the battery assembly, a second end of the first switch module is connected to a first input end of the DC converter, and a second input end of the DC converter is connected to a second power supply pin of the battery assembly; and the first switch module is configured to disconnect the electrical interaction between the battery assembly and the DC converter under the condition that the second control switch is in an off state.

14. The signal bypass device according to claim 13, wherein the first switch module comprises:
a first switch control unit, a control end of the first switch control unit being connected to the second end of the second control switch;
a first switch, a control end of the first switch being connected to an output end of the first switch control unit, a first end of the first switch being connected to the first power supply pin of the battery assembly, a second end of the first switch being connected to the first input end of the DC converter, and the second input end of the DC converter being connected to the second power supply pin of the battery assembly; and
the first switch control unit is configured to output an off signal to the first switch under the condition that the second control switch is in an off state, and the first switch is configured to disconnect the electrical interaction between the battery assembly and the DC converter based on the off signal.

15. The signal bypass device according to claim 14, wherein the first switch module is further configured to implement the electrical interaction between the battery assembly and the DC converter under the condition that the second control switch is in a closed state.

16. The signal bypass device according to claim 11, wherein the first external apparatus is a DC converter, and the second external apparatus is a host;
the host comprises a first control switch; the host is configured to electrically interact with the battery assembly when the first control switch is in an on state, and bypass the target signal of the host when the DC converter provides the target signal for the battery assembly.

17. The signal bypass device according to claim 16, wherein a first end of the first control switch is connected to a third auxiliary power source; and the host further comprises:
a third switch module, a control end of the third switch module being connected to a second end of the first control switch;
when the host is connected to the battery assembly, a first end of the third switch module is connected to the first power supply pin of the battery assembly, a second end of the third switch module is connected to a first input end of the host, and a second input end of the host is connected to the second power supply pin of the battery assembly; and
the third switch module disconnects the electrical interaction between the battery assembly and the host under the condition that the first control switch is in an off state.

18. The signal bypass device according to claim 17, wherein the third switch module comprises:
a second switch control unit, a control end of the second switch control unit being connected to the second end of the first control switch;
a fourth switch, a control end of the fourth switch being connected to an output end of the second switch control unit, a first end of the fourth switch being connected to the first power supply pin of the battery assembly, a second end of the fourth switch being connected to the first input end of the host, and the second input end of the host being connected to the second power supply pin of the battery assembly; and
the second switch control unit is configured to output an off signal to the fourth switch under the condition that the first control switch is in an off state, and the fourth switch is configured to disconnect the electrical interaction between the battery assembly and the host based on the off signal.

19. The signal bypass device according to claim 18, wherein the third switch module is further configured to implement the electrical interaction between the battery assembly and the host under the condition that the first control switch is in a closed state.

20. An energy storage system comprising the signal bypass device according to any one of claims 1 to 19.
